# EUROPÄISCHE PATENTANMELDUNG

(11) **EP 1 124 073 A2**
(43) Veröffentlichungstag der Anmeldung: **16.08.2001**
(21) Anmeldenummer: 01101663.1
(22) Anmeldetag: 29.01.2001
(51) Int. Cl.: F16D 66/02, F16D 65/21

(54) **Verfahren zur Bestimmung des Verschleisszustandes eines Bremsbelages sowie entsprechende elektromechanische Bremsenanordnung**

(30) Priorität: 09.02.2000 DE 10005758
(71) Anmelder: Volkswagen Aktiengesellschaft, 38436 Wolfsburg (DE)
(72) Erfinder: Witte, Bastian, Dr., 38179 Gross Schwülper (DE)

(57) **Zusammenfassung**

Die Erfindung betrifft ein Verfahren zur Bestimmung des Verschleißzustandes eines Bremsbelages (2,3) bei einer elektromechanischen Bremsenanordnung (5). Dieses Verfahren umfaßt die Schritte - Pressen des Bremsbelages gegen eine Bremsfläche (1a,1b) unter einer ersten Belag-Anpresskraft, - Ändern der den Bremsbelag gegen die Bremsfläche drängenden Belag-Anpresskraft, - Erfassen der elastischen Verformung der Bremsanordnung infolge der Änderung der Belag-Anpresskraft, und - Ermitteln von hinsichtlich des Belagverschleißes indikativen Daten auf Grundlage der Belag-Anpresskräfte und der erfassten Verformung der Bremsanordnung. Dadurch wird es auf vorteilhafte Weise möglich, auf die bislang erforderlichen Kontaktelemente sowie deren Verkabelung zu verzichten. Die Erfindung betrifft weiterhin auch eine entsprechende elektromechanische Bremsenanordnung (5).

## Beschreibung

Die Erfindung betrifft ein Verfahren zur Bestimmung des Verschleißzustandes eines Bremsbelages bei einem elektromechanischen Fahrzeugbremssystem. Weiterhin betrifft die Erfindung auch eine elektromechanische Bremsenanordnung die eine Bestimmung des Verschleißzustandes eines Bremsbelages ermöglicht.

Bei Bremssystemen wie sie in großer Breite bei Kraftfahrzeugen Anwendung finden werden die geforderten Radbremsmomente erzeugt indem ein als Verschleißteil ausgebildeter Bremsbelag unter einer auf das gewünschte Radbremsmoment abgestimmten Anpresskraft gegen eine Reibfläche gedrängt wird. Diese Reibfläche ist üblicherweise durch eine Bremsscheibe oder eine Bremstrommel gebildet. Bei elektromechanischen Bremssystemen wird die Bremskraft über eine elektromechanische Antriebseinrichtung bereitgestellt. Hierzu ist beispielsweise ein Elektromotor vorgesehen welcher unter Zwischenschaltung eines Getriebes mit einem Spindelelement gekoppelt ist. Über das Antriebsmoment des Elektromotors kann hierbei die über das Spindelelement übertragene Spann- oder Anpresskraft des Bremsbelages eingestellt werden. Alternativ zu diesen Spindelmechanismen sind weitere elektromechanische "brake by wire" Bremssysteme bekannt bei welchen beispielsweise ein in die Radbremsenanordnung integrierter Elektromotor mit einer Fördereinrichtung gekoppelt ist welche ein in einem Radbremszylinder aufgenommenes Druckmedium entsprechend unter Druck setzt. Dieses Druckmedium beaufschlagt dann einen Bremskolben über welchen der Bremsbelag gegen eine Bremsscheibe gedrängt werden kann.

Bei den bekannten Bremsbelägen ist üblicherweise ein Verschleißkörper auf einer Belagträgerplatte angebracht. Im Rahmen der einzelnen Bremsvorgänge erfolgt ein Abrieb des Verschleißkörpers, so daß dessen Belagdicke allmählich abnimmt. Die Mindest-Belagdicke des Verschleißkörpers kann über ein Kontaktelement erfasst werden das bei Erreichen eines bestimmten Verschleißzustandes mit der Bremsfläche in Kontakt gelangt und hierbei einen entsprechenden Signalabgriff ermöglicht. Eine entsprechende Kontaktanordnung ist aus DE 4231107 A1 bekannt.

Es ist auch möglich wie gemäß DE 196 37 394 C2 vorgeschlagen, die Position des Bremsbelages über Absolut- Weggeber zu erfassen und hieraus Rückschlüsse auf die Belagdicke zu ziehen.

Die Verwendung von Absolut-Weggebern oder auch die Anbringung von Kontaktelementen an den jeweiligen Bremsbelagelementen führt zu einer Verteuerung der Bremssysteme und erweist sich auch im Hinblick auf den hierbei erforderlichen Verkabelungsaufwand sowie die frei verlaufende Verkabelung der entsprechende Leitungen als aufwendig.

Unter dem Eindruck dieses Problems liegt der Erfindung die Aufgabe zugrunde die Erfassung der Belagdicke des Verschleißkörpers eines Bremsbelages einer elektromechanischen Radbremsenanordnung unter einem vergleichsweise geringen apparativen Aufwand zu ermöglichen.

Diese Aufgabe wird erfindungsgemäß gelöst durch ein Verfahren zur Bestimmung des Verschleißzustandes eines Bremsbelages bei einer elektromechanischen Bremsanordnung mit den Schritten, Pressen des Bremsbelages gegen eine Bremsfläche unter einer ersten Belag-Anpresskraft, Ändern der den Bremsbelag gegen die Bremsfläche drängenden Belag-Anpresskraft, Erfassen der elastischen Verformung der Bremsanordnung infolge der Änderung der Belag-Anpresskraft anhand des Belag-Spannweges, und Ermitteln von hinsichtlich des Belagverschleißes indikativen Daten auf Grundlage der Belag-Anpresskräfte und der erfassten Verformung der Bremsenanordnung.

Dadurch wird es auf vorteilhafte Weise möglich, unter Verzicht auf aufwendige Absolut-Weggeber bzw. unter Verzicht auf unmittelbar an dem Bremsbelagträger vorgesehene Sensoreinrichtungen, den momentanen Verschleißzustand und insbesondere die Belagmindestdicke zu Überwachen. Die erforderlichen Eingangsinformationen können ohne besonderen Mehraufwand aus den bei einer elektromechanischen Bremsenanordnung vorhandenen aktuellen Systemdaten ermittelt werden.

Gemäß einer besonders zuverlässigen Ausführungsform des Verfahrens wird anhand des Verhältnisses der Änderungen von Motorstrom und Motordrehwinkel überprüft ob die Bremsanordnung eine Steifigkeit aufweist die auf einen verschlissenen Bremsbelag schließen lässt. Vorzugsweise werden erst Meßwerte ab einem bestimmten Motorstromschwellwert ausgewertet. Die Informationen zur Kraftänderung können auch über einen Bremskraftsensor ermittelt werden.

Gemäß einer besonders bevorzugten Ausführungsform der Erfindung wird die elastische Verformung der Bremsanordnung anhand einer relativen Kraft/Spannweg-Beziehung ermittelt. Die Elastizität des unter der aufgebrachten Bremskraft elastisch verformten Systems wird im wesentlichen durch die Elastizitäten der Bremszange bzw. Bremsfaust, des Antriebsmechanismus des Bremsbelages und der Bremsscheibe bestimmt. Die Elastizitäten der Bremszange der Bremsscheibe und des Antriebsmechanismus werden durch den Verschleiß des Bremsbelages im wesentlichen nicht beeinflusst. Dadurch wird es auf vorteilhafte Weise möglich auf Grundlage einer Veränderung der elastischen Eigenschaften der Bremsenanordnung den Belagverschleiß zu ermitteln. Auf eine absolute Erfassung der Position des Bremsbelages kann hierbei auf vorteilhafte Weise verzichtet werden da die Bestimmung der Elastizität der Bremsenanordnung durch lediglich relative Meßwerte, insbesondere das Verhältnis der Änderungen von Bremskraft und Spannweg zueinander bestimmt werden kann.

Eine hinreichend genaue Bestimmung des Verschleißzustandes des Bremsbelages kann auf vorteilhafte Weise dadurch erreicht werden, daß die Kraft/Weg-Beziehung der den Bremsbelag umfassenden Bremsenanordnung mit einer Referenz Kraft/Weg-Beziehung verglichen wird. Im einfachsten Fall handelt es sich bei dieser Referenz Kraft/Weg-Beziehung um einen Schwellenwert oder um eine lineare Funktion. Eine höhere Beurteilungsqualität wird auf vorteilhafte Weise dadurch erreicht, daß diese Referenz Kraft/Weg-Beziehung durch eine Näherungsfunktion oder ein Kennfeld beschrieben ist. Diese Referenz Beziehung kann auf vorteilhafte Weise Parameter wie beispielsweise die momentane Bremsentemperatur oder die momentane Radwinkelgeschwindigkeit berücksichtigen. Die Bremsentemperatur kann anhand eines Temperaturmodells das die am Rad umgesetzte Energie berücksichtigt, ermittelt werden.

Es ist auch möglich, die Referenz Kraft/Weg-Beziehung derart zu definieren, daß diese die Elastizität der Bremsenanordnung ohne den Bremsbelag beschreibt. Anhand der für das gesamte, den Bremsbelag umfassende System ermittelte Elastizität und der Referenz Elastizität des Systems ohne Bremsbelag kann dann die Elastizität des Bremsbelages errechnet werden. Unter Berücksichtigung von Korrekturparametem (Temperatur, Momentanverschleißfaktor, Scheibenabrieb, Setzungsbeitrag) kann dann ein Verschleißkennwert ermittelt werden.

Es ist in vorteilhafter Weise auch möglich, als Referenz Kraft/Weg-Charakteristik eine Beziehung zu verwenden welche die Elastizität der Bremsenanordnung mit einem unverschlissenen oder definiert insbesondere auf eine Mindestdicke verschlissenen Bremsbelag beschreibt.

Eine einfache Beurteilung des Verschleißzustandes des Bremsbelages wird hierbei dadurch möglich, daß der ermittelte Elastizitätswert der Bremsenanordnung mit einem vorgegebenen Mindest-Elastizitätswert verglichen wird. Der aktuelle Elastizitätswert der elektromechanischen Bremsenanordnung kann hierbei durch Bildung der Ableitung (dl/ds) der Strom/Spannweg-Funktion ermittelt werden. Vorzugsweise werden die Elastizitätswerte nur für vorbestimmte Kraftintervalle ermittelt in welchen Setzungserscheinungen weitgehend vernachlässigt werden können.

In weiterhin besonders vorteilhafter Weise werden die Elastizitätswerte erst ermittelt, wenn der Bremsbelag für eine vorgegebene Mindestdauer vorzugsweise im Bereich von 0,1 bis 0,5 s gegen die Reibfläche insbesondere Bremsscheibe gedrängt wurde.

Wie bereits angegeben wird in vorteilhafter Weise die momentane Bremsentemperatur berücksichtigt. Diese momentane Bremsentemperatur kann insbesondere unter Berücksichtigung der Umgebungstemperatur und Radwinkelgeschwindigkeit auf Grundlage der in der Bremsenanordnung geleisteten Reibarbeit näherungsweise ermittelt werden. Die Radwinkelgeschwindigkeit steht vorzugsweise über ein ABS-System zur Verfügung. Die Umgebungstemperatur kann im Falle eines Verbrennungsmotor-Fahrzeugantriebes ggf. über das Gemischaufbereitungssystem gelesen werden.

Die im Rahmen der Änderung der Bremskraft auftretende relative elastische Verformung der Bremsanordnung wird bei einer elektromechanischen Bremse auf vorteilhafte Weise über einen in den Antriebsmotor der Bremse integrierten Inkremental-Sensor erfaßt. Ein derartiges Vorgehen ermöglicht aufgrund des zwischengeschalteten, vorzugsweise verspannten Getriebes eine besonders präzise Erfassung des Spannweges. Sofern der Antriebsmotor eine absolute Wegsteuerung ermöglicht, ist es auch möglich die Wegänderung aus den Motorantriebssignalen zu ermitteln.

Die Belag-Andruckkraft wird auf vorteilhafte Weise über den Leistungsbezug des Elektromotors insbesondere über den Motorstrom, erfaßt.

Eine besonders zuverlässige Bestimmung der Elastizität der Bremsenanordnung wird auf vorteilhafte Weise dadurch erreicht, daß insbesondere während eines Bremsvorganges mehrere Meßwertpaare erfaßt werden. Die Meßwertpaare können sowohl während einer Bremskraft-Anstiegsphase als auch während einer Bremskraft-Abnahmephase ermittelt werden.

Die Wertepaare können beispielsweise im Rahmen eines Prüfzyklus am stehenden Fahrzeug und/oder im Rahmen der beim Betrieb des Fahrzeuges auftretenden Bremsvorgänge ermittelt werden. Die Auswertung der Daten muß nicht in Echtzeit erfolgen sondern kann auch zeitlich verzögert erfolgen. In besonders vorteilhafter Weise können ABS-Regelzyklen zunächst gespeichert und später ausgewertet werden.

In besonders vorteilhafter Weise erfolgt die Bestimmung der Elastizität der Bremsanordnung durch Auswertung über einen längeren Betriebszeitraum wobei vorzugsweise die Meßwertpaare einer Vielzahl von Bremsvorgängen zusammengefasst ausgewertet werden.

Eine weitere Steigerung der Präzision der Verschleißbestimmung kann auch unter Berücksichtigung der Historie der vorangegangenen Bremsvorgänge und der im Rahmen dieser Bremsvorgänge angefallenen Reibarbeit erreicht werden. Die Reibarbeit kann durch entsprechende Modelle, näherungsweise durch Integration der Bremskraft (insbes. Motorstom) über die Radwinkelgeschwindigkeit erreicht werden.

Eine besonders präzise und vergleichsweise einfache Auswertung der Meßwerte wird ermöglicht, indem der Bremszustand nur ermittelt wird wenn die erwarteten Bremstemperaturen unter einer vorbestimmten Temperatur insbesondere unter 50° C liegen. Insbesondere in diesem Temperaturbereich unterliegen die mechanischen Eigenschaften des Bremsbelages sowie auch der Bremsenfaust nur vergleichsweise geringen Schwankungen. Hierdurch ist eine hohe Aussagefähigkeit des Vergleichs der einzelnen Meßwertpaare gegeben. In vorteilhafter Weise ist es möglich, die Bestimmung des Belagverschleißes auf Elastizitätsinformationen zu beschränken die bei Bremsentemperaturen unterhalb von 50°C ermittelt wurden. Es ist auch möglich, in Abhängigkeit von den erwarteten Bremsentemperaturen Gewichtungsfaktoren zu den einzelnen Meßwertpaaren zu vergeben. Vorzugsweise werden für Meßwertpaare in einem Temperaturbereich oberhalb 50°C rasch abnehmende Gewichtungsfaktoren vergeben.

In vorrichtungstechnischer Hinsicht wird die eingangs angegebene, Aufgabe erfindungsgemäß gelöst durch eine elektromechanische Bremsenanordnung mit einer elektromechanischen Antriebseinrichtung zum Spannen eines Bremsbelages gegen eine Reibfläche, einer Einrichtung zur Erzeugung eines hinsichtlich der Belagandruckkraft indikativen Signals, einer Einrichtung zur Erfassung einer relativen Spannwegänderung bei einer Änderung der Belagandruckkraft, und einer Einrichtung zur Erzeugung eines hinsichtlich der Elastizität der Bremsenanordnung indikativen Signals auf Grundlage der Änderung der Belagandruckkraft und der hiermit einhergehenden relativen Änderung des Spannweges.

Dadurch wird es auf vorteilhafte Weise möglich auf die bislang erforderlichen Verschleiß-Kontaktelemente sowie deren Verkabelung zu verzichten.

Zur Erfassung der relativen Änderung des Spannweges ist gemäß einer besonders bevorzugten Ausführungsform der Erfindung eine Motordrehwinkel-Erfassungseinrichtung vorgesehen. Zur Erfassung der Belagandruckkraft ist vorzugsweise ein Kraftsensor oder eine Motorstromerfassungseinrichtung vorgesehen .

Eine zuverlässige Auswertung der Meßdaten ist in vorteilhafter Weise dadurch gegeben, daß eine Vergleichseinrichtung vorgesehen ist, zum Vergleichen der ermittelten Elastizität der Bremsenanordnung mit einer vorgegebenen maximalen Elastizität.

In vorteilhafter Weise ist eine Speichereinrichtung vorgesehen, zur Abspeicherung der für vorangegangene Bremsvorgänge ermittelten elastizitätsindikativen Daten. Diese gespeicherten Daten können beispielsweise zum Zwecke der Verifikation der neuen Verschleißkennwerte berücksichtigt werden. Im Regelfall kann die Steifigkeit des Bremssystems nur zunehmen.

Eine besonders zuverlässige Ermittlung des Verschleißzustandes kann dadurch erreicht werden, daß eine Temperaturkorrekturvorrichtung vorgesehen ist, zur Berücksichtigung der Temperatur des Bremsbelages bei der Ermittlung der Steifigkeit bzw. Elastizität der Bremsenanordnung.

Weitere vorteilhafte Ausgestaltungen sind Gegenstand der Unteransprüche.

Weitere Einzelheiten der Erfindung ergeben sich aus der nachfolgenden Beschreibung in Verbindung mit der Zeichnung. Es zeigen:
- **Fig.1**: eine vereinfachte Schnittansicht durch eine elektromechanische Radbremsenanordnung mit einer Auswertungseinrichtung zur Bestimmung des Belagverschleißes anhand des Motordrehmomentes und der elastischen Verformung der in einer Bremsenfaust aufgenommenen Bremsbeläge;
- **Fig.2a**: ein vereinfachtes Diagramm zur Erläuterung der verschleißbedingten Änderung der Gesamtelastizität einer Bremsvorrichtung;
- **Fig.2b**: ein vereinfachtes Diagramm zur Erläuterung der Änderung der Systemsteifigkeit anhand der Ableitung der Gesamtelastizität einer Bremsvorrichtung;
- **Fig.2c**: ein vereinfachtes Diagramm zur Erläuterung der Veränderung des mit zunehmendem Belagverschleiß kleiner werdenden Spannweges;
- **Fig.3**: ein Flußdiagramm zur Erläuterung einer bevorzugten Ausführungsform des Verfahrens zu Bestimmung des Belagverschleißes.

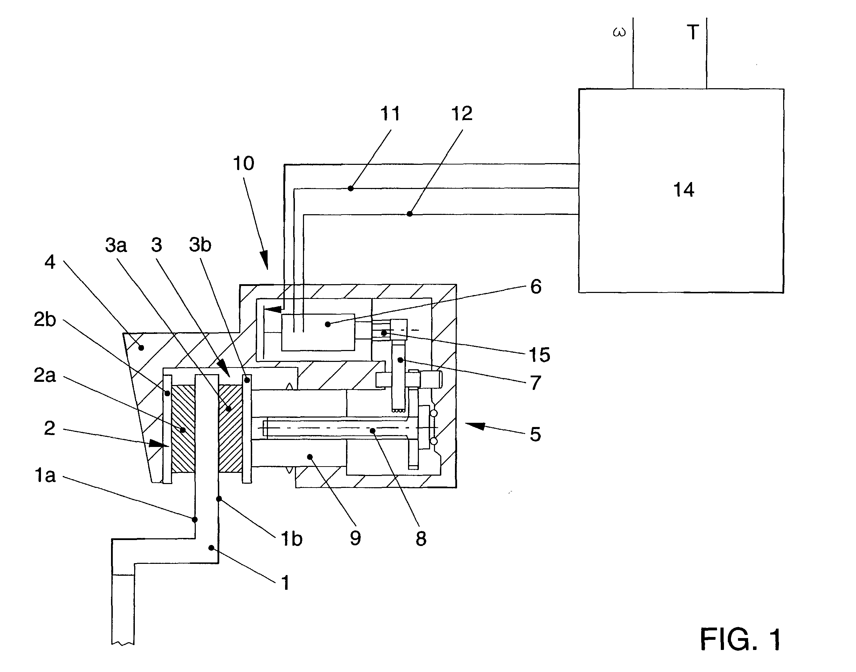

Die in Fig.1 gezeigte Bremsenanordnung umfaßt eine Bremsscheibe 1 die zwei Reibflächen 1a und 1b bildet. Die Bremsscheibe 1 erstreckt sich zwischen zwei Bremsbelägen 2, 3, zur Aufbringung einer Bremskraft in einstellbarer Weise. Die Bremsbeläge 2, 3 umfassen jeweils einen Verschleißkörper 2a, 3a und jeweils eine Belagträgerplatte 2b, 3b.

Die Bremsbeläge 2, 3 sind in einer die Bremsscheibe 1 umgreifenden Bremsenfaust 4 aufgenommen. In die Bremsenfaust 4 ist eine elektromechanische Antriebseinrichtung 5 integriert.

Die elektromechanische Antriebseinrichtung 5 umfaßt bei der hier dargestellten Ausführungsform einen Elektromotor 6, eine mit diesem gekoppelte Getriebeeinrichtung 7, ein mit der Getriebeeinrichtung 7 gekoppeltes Spindelelement 8 sowie einen mit dem Spindelelement 8 in Eingriff stehenden Bremskolben 9.

Der Elektromotor 6 ist hier mit einem Inkremental-Drehgeber 10 versehen zur relativen Erfassung des Motor-Drehwinkels ϕ. Der Inkremental-Drehgeber 10 sowie zur Spannungsversorgung des Elektromotors 6 vorgesehene Leitungen 11, 12 sind mit einer Auswertungseinrichtung 14 verbunden.

Zur Erzeugung eines Bremsmomentes werden die Bremsbeläge 2,3 nach Überwindung des Luftspiels unter einer vorbestimmten Anpresskraft gegen die Bremsscheibe 1 gedrängt. Hierzu wird über die Leitungen 11, 12 Spannung an den Elektromotor 6 angelegt. Das entsprechend der angelegten Motorspannung an einer Motorausgangswelle 15 anliegende Drehmoment wird über die Getriebeeinrichtung 7 entsprechend erhöht auf das Spindelelement 8 übertragen. Das Spindelelement 8 stützt sich in der Bremsenfaust 4 ab und drängt über den Bremskolben 9 den Bremsbelag 3 gegen die Bremsscheibe 1. Aufgrund der hier nicht näher dargestellten schwimmenden Lagerung der Bremsenfaust 4 ergibt sich auch für den Bremsbelag 2 im wesentlichen die gleiche Anpresskraft. Die Bremsenfaust 4 ist vorzugsweise besonders biegesteif ausgebildet. Vorzugsweise ist die Bremsenfaust derart biegesteif ausgebildet, daß deren Spannwegbeitrag den drei- bis vierfachen Spannwegbeitrag des Bremsbelages im unverschlissenen Zustand nicht überschreitet. Weiterhin ist die Bremsenfaust mit Vorteil derart ausgebildet, daß deren elastisches Verhalten durch die betriebsbedingte Bremsenaufheizung nur in vergleichsweise geringem Maße beeinflusst wird.

Bei der dargestellten Bremseneinrichtung wird infolge der über das Spindelelement 8 aufgebrachten Druckkraft die Bremsenfaust 4 elastisch aufgeweitet. Die Bremsbeläge 2 und 3, der Bremskolben 9 und das Spindelelement 8 werden elastisch gestaucht. Der Grad der Aufweitung der Bremsenfaust 4 bzw. die Stauchung der genannten weiteren Komponenten ist abhängig von der aufgebrachten Bremskraft welche wiederum durch das Antriebsmoment des Elektromotors 6 bestimmt wird. Bei der gezeigten Ausführungsform ergibt sich bei einem neuwertigen Bremsbelag und bei einer Änderung der Bremskraft von 10 auf 20 kN eine Spannwegveränderung von 0,45mm. Bei einem nahezu vollständig verschlissenen Bremsbelag wird nur noch einen relative Spannwegänderung von 0,28mm gemessen, da im wesentlichen kein Spannwegbeitrag durch die Stauchung des Bremsbelages geleistet wird.

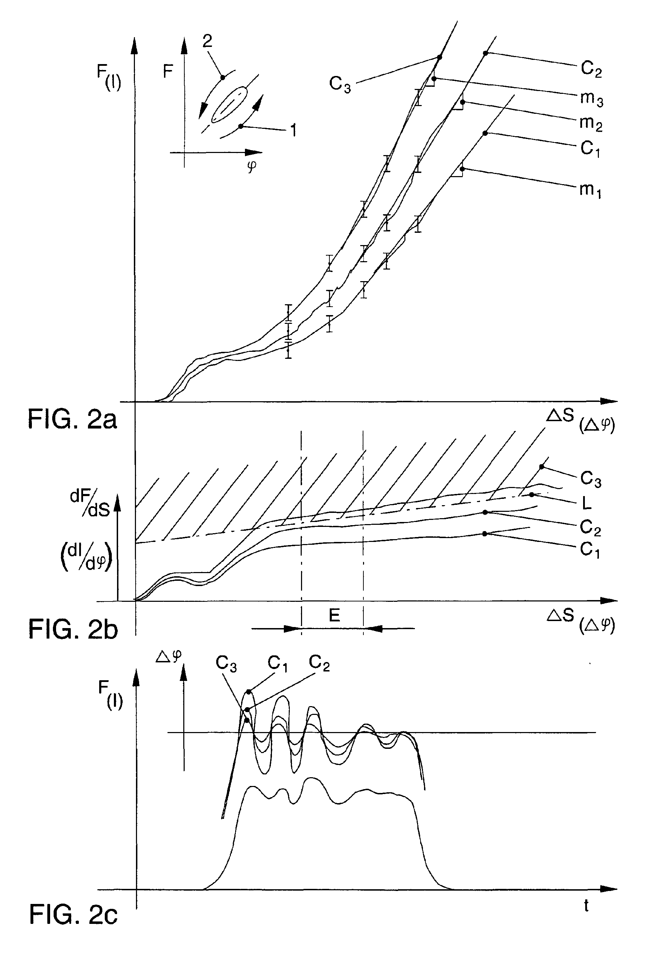

Im Rahmen der sukzessive erfolgenden Bremsvorgänge verschleißen die Verschleißkörper 2a, 3a. Durch diesen Verschleiß ändert sich die Steifigkeit des die Bremsenfaust 4, das Spindelelement 8, den Bremskolben 9 und die beiden (Rest-) Bremsbeläge 2,3 umfassenden Systems. Die Systemsteifigkeit kann über die Auswertungseinrichtung 14 durch Erfassung des Motordrehwinkels ϕ in Abhängigkeit vom Motorleistungsbezug ermittelt werden. Wie dies nachfolgend unter Bezugnahme auf die Figuren 2a, 2b und 2c erläutert werden wird.

In Fig. 2a sind beispielhaft für drei unterschiedliche Belagverschleißzustände jeweils die Beziehung zwischen dem Motorstrom (Motordrehmoment) und dem Motordrehwinkel ϕ dargestellt.

Der Graph c1 beschreibt das Verhalten eines Bremsbelages in unverschlissenem Neuzustand. Der Graph c2 beschreibt das Verhalten eines Bremsbelages mit einem auf 50% der ursprünglichen Belagstärke abgetragenen Bremsbelag. Der Graph c3 zeigt die deutlich höhere Steifigkeit eines Bremsbelages mit einer auf 10% verminderten Restbelagstärke. An der Ordinate ist hier die Bremsbelagandruckkraft aufgetragen. Diese Bremsbelagandruckkraft steht mit dem Motorleistungsbezug und bei entsprechendem Aufbau des Motors mit dem Motorstrom, in unmittelbaren Zusammenhang. An der Abszisse ist der relative Spannweg des elastischen Systems aufgetragen der im wesentlichen zu dem Motordrehwinkel ϕ proportional ist.

Der untere Bereich der Graphen c1, c2, c3 ist durch Spiel- und Setzungseffekte beeinflusst. Die Aussagefähigkeit der Messwerte in diesem Bereich ist daher vergleichsweise gering. Vorzugsweise wird erst oberhalb einer vorbestimmten Mindestandruckkraft der Bremsbeläge mit der Ermittlung der Systemeleastizität begonnen. Bei der Ermittlung der Messwerte ist es möglich die im wesentlichen durch Reibungseinflüsse der Antriebseinrichtung verursachte Systemhysterese zu berücksichtigen indem unterschieden wird, ob die Meßergebnisse im Zuge einer Erhöhung (1) oder einer Absenkung (2) der Belagandruckkraft ermittelt werden. Diese Systemhysterese kann näherungsweise durch eine entsprechende Funktion oder durch ein Kennfeld berücksichtigt werden. Eine Skizze zu dieser Systemhysterese ist in das Diagramm gem. Fig.2a eingefügt.

In Fig. 2b ist vereinfacht die Ableitung dF/ds für unterschiedliche Verschleißzustände des Bremsbelages dargestellt. Die Graphen c1,c2 und c3 beschreiben wiederum das Verhalten des elastischen Systems für verschiedene hier von c1 nach c3 zunehmende Belagverschleißzustände.

Durch den Buchstaben E ist ein Beobachtungsintervall gekennzeichnet das hier beispielhaft den Bereich von 30% bis 50% des maximalen Motorstromes abdeckt. Es ist möglich die Belagdickenbestimmung auf Untersuchungen in diesem Intervall zu beschränken. Durch die Strichpunktlinie L ist ein Grenzbereich gekennzeichnet, wobei im vorliegenden Fall unterhalb der Strichpunktlinie L die Systemelastizität einen Rückschluss auf eine noch ausreichende Belagdicke erlaubt. Der Graph c3 verläuft bereits oberhalb des Grenzbereiches und deutet auf einen nahezu vollständigen Verschleiß des Belages hin.

In Fig. 2c ist ein Bremsvorgang mit schwankenden Bremsbelagandruckkräften dargestellt. Derartige Bremskraftverläufe treten beispielsweise im Rahmen eines über einen antiblockier Regelzyklus geregelten Bremsvorganges auf. Anhand der in Fig.2c überlagert dargestellten zeitlichen Verlaufs des Motordrehwinkels wird deutlich, daß die geforderte Bremskraft je nach Verschleiß des Bremsbelages unterschiedliche Motordrehwinkelnachstellungen ϕ erfordert. Bei einem noch vollkommen unverschlissenen Bremsbelag (Graph c1) ergeben sich die größten Motordrehwinkel ϕ. Mit zunehmendem Belag-Verschleiß nimmt der erforderliche Spannweg und damit der erforderliche Motordrehwinkel ϕ ab.

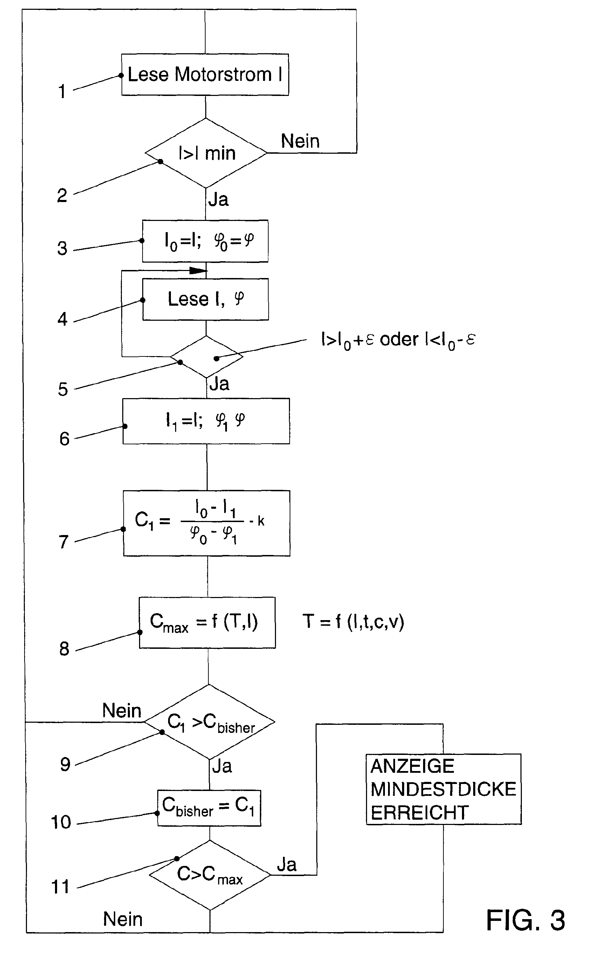

Die vorzugsweise laufende Überwachung des Belagzustandes kann auf Grundlage des in Fig. 3 vereinfacht beschriebenen Auswertungszyklus erfolgen.

Gemäß Schritt 1 wird zunächst der momentane Motorstrom I erfasst. In Schritt 2 wird überprüft ob dieser momentane Motorstrom I oberhalb eines Schwellwertes ( beispielsweise lmax/3) liegt. Liegt der erfasste Motorstrom unter diesem Grenzwert wird erneut der Motorstrom erfasst. Liegt der Motorstrom über dem Grenzwert Imin so wird gem. Schritt 3 dieser momentane Motorstrom als I₀ und der momentane Motorwinkel als ϕ₀ gespeichert (der Motorwinkel ϕ kann auch auf Null gesetzt werden). Der Motorstrom wird weiter erfasst. Sobald der erfasste Motorstrom I von dem gespeicherten Motorstrom I₀ um einen vorbestimmten Betrag ε abweicht wird gem. Schritt 5 veranlasst, daß der aktuelle Motorstrom I sowie die gegenüber ϕ₀ eingetretene Motorwinkeländerung gespeichert werden.

In Schritt 7 wird auf Grundlage des Verhältnisses der Änderungen des Motorstromes I zu der eingetretenen relativen Drehwinkeländerung des Motors die momentane Systemsteifigkeit bestimmt. Hierbei können Korrekturterme K die beispielsweise die Systemhysterese beschreiben, berücksichtigt werden.

Gem. Schritt 8 wird eine für die momentanen Betriebsbedingungen maximale Systemsteifigkeit cₘₐₓ ermittelt. Hierzu kann ein Kennfeld oder eine Näherungsfunktion herangezogen werden. Diese Näherungsfunktion berücksichtigt vorzugsweise die momentane Bremsentemperatur, die momentane Bremskraft, die Winkelgeschwindigkeit der Bremsscheibe, die Umgebungstemperatur und die durch die verrichtete Reibleistung verursachte Aufheizung der Bremsenanordnung.

In Schritt 9 erfolgt ein Vergleich ob die ermittelte Federkonstante des Systems über der bisherigen Federkonstante liegt. Liegt die ermittelte Federkonstante über der bisherigen Federkonstante so wird diese als neue Systemfederkonstante abgespeichert. Gem. Schritt 11 wird untersucht, ob die neue Systemfederkonstante einen zulässigen Maximalwert überschreitet. Ist dies der Fall, so kann beispielsweise ein entsprechender Wartungshinweis ggf. unter Hinweis auf den aktuellen Belagzustand gegeben werden. Nunmehr erfolgt eine Rückkehr zu Schritt 1.

Die zeitliche Abfolge der beschriebenen Verfahrensschritte kann ggf. verändert werden. Auch ist es möglich mehrere Schritte zusammenzufassen. Anstelle des Motorstromes und des Motordrehwinkels können auch andere Systemdaten zur Ermittlung der Elastizität der Bremsenanordnung herangezogen werden.

### BEZUGSZEICHENLISTE

- 1: Bremsscheibe
- 1a,1b: Reibflächen
- 2: Bremsbelag
- 2a: Verschleißkörper
- 2b: Belagträgerplatte
- 3: Bremsbelag
- 3a: Verschleißkörper
- 3b: Belagträgerplatte
- 4: Bremsenfaust
- 5: elektromechanische Antriebseinrichtung
- 6: Elektromotor
- 7: Getriebeeinrichtung
- 8: Spindelelement
- 9: Bremskolben
- 10: Inkremental Drehgeber
- 11: Leitung (elektrisch)
- 12: Leitung (elektrisch)
- 14: Auswertungseinrichtung
- 15: Motorausgangswelle

## Patentansprüche

1. Verfahren zur Bestimmung des Verschleißzustandes eines Bremsbelages bei einer elektromechanischen Bremsanordnung mit den Schritten:
- Pressen des Bremsbelages gegen eine Bremsfläche unter einer ersten Belag-Anpresskraft,
- Ändern der den Bremsbelag gegen die Bremsfläche drängenden Belag-Anpresskraft,
- Erfassen der elastischen Verformung der Bremsanordnung infolge der Änderung der Belag-Anpresskraft, und
- Ermitteln von hinsichtlich des Belagverschleißes indikativen Daten auf Grundlage der Belag-Anpresskräfte und der erfassten Verformung der Bremsanordnung.

2. Verfahren nach Anspruch 1, **dadurch gekennzeichnet,** daß die elastische Verformung der Bremsanordnung anhand eines Bremsbelag-Spannweges ermittelt wird.

3. Verfahren nach Anspruch 1 oder 2, **dadurch gekennzeichnet,** daß der Belagverschleiß auf Grundlage der Änderung der Elastizität der Bremsanordnung ermittelt wird.

4. Verfahren nach wenigstens einem der Ansprüche 1 bis 3, **dadurch gekennzeichnet,** daß die Kraft/Spannweg-Beziehung der den Bremsbelag umfassenden Bremsenanordnung mit einer Referenz Kraft/Weg-Beziehung verglichen wird.

5. Verfahren nach wenigstens einem der Ansprüche 1 bis 4, dadurch gekennzeichnet, daß die Referenz Kraft/Spannweg-Beziehung die Elastizität der Bremsenanordnung ohne dem Bremsbelag beschreibt.

6. Verfahren nach wenigstens einem der Ansprüche 1 bis 4, **dadurch gekennzeichnet,** daß die Referenz Kraft/Spannweg-Charakteristik die Elastizität der Bremsenanordnung mit einem unverschlissenen Bremsbelag beschreibt.

7. Verfahren nach wenigstens einem der Ansprüche 1 bis 4, **dadurch gekennzeichnet,** daß die Referenz Kraft/Spannweg-Charakteristik die Elastizität der Bremsenanordnung in einem Zutand mit einem auf eine Mindestdicke verschlissenen Bremsbelag beschreibt.

8. Verfahren nach wenigstens einem der Ansprüche 1 bis 7, **dadurch gekennzeichnet,** daß der ermittelte Elastizitätswert der Bremsenanordnung mit einem vorgegebenen Mindest-Elastizitätswert verglichen wird.

9. Verfahren nach wenigstens einem der Ansprüche 1 bis 5, **dadurch gekennzeichnet,** daß die Bremsentemperatur berücksichtigt wird

10. Verfahren nach wenigstens einem der Ansprüche 1 bis 9, **dadurch gekennzeichnet,** daß die Bremsentemperatur unter Berücksichtigung der Reibarbeit der Bremsenanordnung ermittelt wird.

11. Verfahren nach wenigstens einem der Ansprüche 1 bis 10, **dadurch gekennzeichnet,** daß der Bremsbelag-Spannweg über einen Inkrementalsensor erfaßt wird.

12. Verfahren nach wenigstens einem der Ansprüche 1 bis 11, **dadurch gekennzeichnet,** daß die Belag-Andruckkraft über den Leistungsbezug des Elektromotors erfaßt wird.

13. Verfahren nach wenigstens einem der Ansprüche 1 bis 12, **dadurch gekennzeichnet,** daß mehrere Meßwertpaare erfaßt werden.

14. Verfahren nach wenigstens einem der Ansprüche 1 bis 13, **dadurch gekennzeichnet,** daß die Meßwertpaare einzelner Bremsvorgänge zusammengefasst ausgewertet werden.

15. Verfahren nach wenigstens einem der Ansprüche 1 bis 14, **dadurch gekennzeichnet,** daß aus der Historie der vorangegangenen Bremsvorgänge und der im Rahmen dieser Bremsvorgänge angefallenen Reibarbeit der Verschleißzustand bestimmt wird.

16. Verfahren nach wenigstens einem der Ansprüche 1 bis 15, **dadurch gekennzeichnet,** daß der Bremszustand ermittelt wird wenn die erwarteten Bremstemperaturen unter einer vorbestimmten Temperatur insbesondere 50° C liegen.

17. Verfahren nach wenigstens einem der Ansprüche 1 bis 15, **dadurch gekennzeichnet,** daß ausschließlich Meßwertpaare für erwartete Bremsentemperaturen in einem Temperaturbereich unterhalb 50°C zur Verschleißbestimmung herangezogen werden.

18. Elektromechanische Bremsenanordnung mit:
- einer elektromechanischen Antriebseinrichtung zum Spannen eines Bremsbelages gegen eine Reibfläche,
- einer Einrichtung zur Erzeugung eines hinsichtlich der Belagandruckkraft indikativen Signals,
- einer Einrichtung zur Erfassung einer relativen Spannwegänderung bei einer Änderung der Belagandruckkraft,
- einer Einrichtung zur Erzeugung eines hinsichtlich der Elastizität der Bremsenanordnung indikativen Signals auf Grundlage der Änderung der Belagandruckkraft und der hiermit einhergehenden relativen Änderung des Spannweges.

19. Elektromechanische Bremsenanordnung nach Anspruch 18,dadurch gekennzeichnet, daß zur Erfassung der relativen Änderung des Spannweges eine Motordrehwinkel-Erfassungseinrichtung vorgesehen ist.

20. Elektromechanische Bremsenanordnung nach Anspruch 18 oder 19, **dadurch gekennzeichnet,** daß zur Erfassung der Belagandruckkraft eine Motorstromerfassungseinrichtung vorgesehen ist.

21. Elektromechanische Bremsenanordnung nach wenigstens einem der Ansprüche 18 bis 20, **dadurch gekennzeichnet,** daß eine Vergleichseinrichtung vorgesehen ist, zum Vergleichen der ermittelten Elastizität der Bremsenanordnung mit einer vorgegebenen maximalen Elastizität.

22. Elektromechanische Bremsenanordnung nach wenigstens einem der Ansprüche 18 bis 21, **dadurch gekennzeichnet,** daß eine Speichereinrichtung vorgesehen ist, zur Abspeicherung der für vorangegangene Bremsvorgänge ermittelten elastizitätsindikativen Daten.

23. Elektromechanische Bremsenanordnung nach wenigstens einem der Ansprüche 18 bis 22, **dadurch gekennzeichnet,** daß eine Temperaturkorrekturvorrichtung vorgesehen ist, zur Berücksichtigung der Temperatur des Bremsbelages bei der Ermittlung der Elastizität der Bremsenanordnung.

24. Bremsbelag für eine elektromechanische Bremsenanordnung nach wenigstens einem der Ansprüche 18 bis 23, **dadurch gekennzeichnet,** daß dessen Verschleißkörper derart ausgebildet ist, daß dieser in Belagandruckrichtung eine vorbestimmte Drucksteifigkeit aufweist.
